# EUROPÄISCHE PATENTSCHRIFT

(11) **EP 2 041 514 B1**
(45) Veröffentlichungstag und Bekanntmachung des Hinweises auf die Patenterteilung: **12.05.2010**
(21) Anmeldenummer: 07786002.1
(22) Anmeldetag: 12.07.2007
(51) Int. Cl.: G01C 3/00, G01C 3/02, G01S 17/08

(54) **ELEKTROOPTISCHER ENTFERNUNGSMESSER**
ELECTRO-OPTICAL RANGE FINDER
TÉLÉMÈTRE ÉLECTRO-OPTIQUE

(30) Priorität: 17.07.2006 EP 06117303
(43) Veröffentlichungstag der Anmeldung: 01.04.2009
(73) Patentinhaber: Leica Geosystems AG, 9435 Heerbrugg (CH)
(72) Erfinder: JENSEN, Thomas, CH-9400 Rorschach (CH); KIPFER, Peter, CH-9437 Marbach (CH); STAUFFER, Laurent, CH-9443 Widnau (CH); STUTZ, Reto, CH-9442 Berneck (CH)
(74) Vertreter: Kaminski Harmann
(86) Internationale Anmeldenummer: PCT/EP2007/006170
(87) Internationale Veröffentlichungsnummer: WO 2008/009381

(56) Entgegenhaltungen:
- EP-A- 1 517 415
- KALLENBACH S; KELEMEN MR T; AIDAM R; LOSCH R; KAUFEL G; MIKULLA M; WEIMANN G: "High-power high-brightness ridge-waveguide tapered diode lasers at 14xx nm" PROCEEDINGS OF THE SPIE, Bd. 5738, Nr. 1, 2005, Seiten 406-415, XP002411981 Bellingham, USA
- SHENG-HUI YANG ET AL: "Generation of High-Power Picosecond Pulses from a Gain-Switched Two-Section Quantum-Well Laser with a Laterally Tapered Energy-Storing Section" IEEE PHOTONICS TECHNOLOGY LETTERS, IEEE SERVICE CENTER, PISCATAWAY, NJ, US, Bd. 8, Nr. 3, März 1996 (1996-03), XP011048176 ISSN: 1041-1135
- PFAHLER C ET AL: "Gain saturation and high-power pulsed operation of GaSb-based tapered diode lasers with separately contacted ridge and tapered section" APPLIED PHYSICS LETTERS, AIP, AMERICAN INSTITUTE OF PHYSICS, MELVILLE, NY, US, Bd. 89, Nr. 2, 12. Juli 2006 (2006-07-12), Seiten 21107-1-21107-3, XP012086920 ISSN: 0003-6951

## Beschreibung

Die Erfindung betrifft einen elektrooptischen Entfernungsmesser nach dem Oberbegriff des Anspruch 1, ein Vermessungsgerät mit einem ebensolchen Entfernungsmesser sowie ein Verfahren zur Erzeugung gepulster Laserstrahlung in einem Entfernungsmesser nach dem Oberbegriff des Anspruchs 12.

In vielen geodätischen Anwendungen ist die Emission von Laserlicht erforderlich oder vorteilhaft. Dies betrifft insbesondere die elektrooptische Entfernungsmessung mit geodätischen Genauigkeiten, die typischerweise im Millimeter- oder Submillimeterbereich liegen und beispielsweise durch das Pulslaufzeitmesser- oder Phasenmesserprinzip erreichbar sind. Gattungsgemässe und geeignete Verfahren und Vorrichtungen zur Entfernungsmessung werden beispielsweise in der EP 0 738 899 B1 oder der WO2004/074773 beschrieben.

Die Vermessung von Distanzen über die für geodätische Anwendungen erforderlichen grösseren Entfernungen stellt hohe Anforderungen an die Strahlquelle. Für hochgenaue Entfernungsmessungen ist es vorteilhaft, wenn die Strahlungsquelle Strahlung mit einer gut definierten optischen Pulsform bereitstellt. Für eine genaue Distanzmessung nach dem Laufzeitmessprinzip muss dabei die Strahlquelle im ns-Bereich gepulst sein, über eine hohe Pulsspitzenleistung verfügen sowie eine sehr gute Strahlqualität aufweisen, z.B. eine ebene, nicht gekrümmte Emissionswellenfront.

Die aus diesem wichtigsten Anwendungsbereich resultierenden Anforderungen an die Laseremission von geodätischen Geräten betreffen die Leistung und die Modenstruktur. Während bei kontinuierlicher Emission Leistungen im mW-Bereich erzielt werden, ist es für Entfernungsmessungen über grössere Distanzen vorteilhaft, Leistungen im Bereich einiger 10 W zu erreichen, die bei Pulsbetrieb insbesondere durch kurze, aber hochenergetische Pulse erreicht werden können. Daneben sollte ein möglichst kleiner und homogener Strahlquerschnitt zur Verfügung gestellt werden, so dass auch eine Auflösung kleiner Strukturen möglich ist. Der Strahlquerschnitt bzw. das Strahlprofil sollte nach Möglichkeit über die gesamte Messdistanz gleich bleiben bzw. sich nur geringfügig ändern.

In geodätischen Entfernungsmessern des Stands der Technik werden als Laserquellen häufig Laserdioden eingesetzt. Diese Halbleiterlaser haben jedoch den Nachteil, dass sie im Multi-Mode-Betrieb emittieren und als Kantenemitter einen geometrisch ungünstigen Strahlquerschnitt aufweisen.

So existieren im Stand der Technik verschiedene Ansätze, die Emission einer Laserquelle durch geeignete Wahl des Lasertyps, spezieller Betriebsart und Strahlformungsmittel in eine für geodätisch präzise Anwendungen nutzbare Form zu überführen.

Beispielweise ist aus der WO 01/84077 ein optischer Entfernungsmesser bekannt, der die Teilstrahlen einer kantenemittierenden Laserdiode durch eine nachgeordnete Strahlformungsoptik derart ablenkt und auf die Apertur einer Objektivlinse lenkt, dass sie dieselbe im wesentlichen ausfüllen. Dabei besitzt die Emission der Laserdiode jedoch noch immer eine Multi-Mode-Charakteristik.

Die zur Leistungssteigerung ebenfalls mögliche Kombination der Emission von vielen einzelnen Laserdioden eines Arrays in einen gemeinsamen Strahl besitzt zudem den Nachteil mangelnder Kohärenz.

Heute erhältliche kommerzielle narrow-stripe Halbleiterlaser mit einer Emissionsfläche von 1x3 µm erlauben zwar eine beugungsbegrenzte Abstrahlung, sind aber nur für den gepulsten Bereich von unter 1 W Pulsspitzenleistung mit noch akzeptabler Lebensdauer, z.B. von 5000 h, geeignet. Höhere Pulsspitzen- oder Peakleistungen führen zu einer irreversiblen Beschädigung der optischen Austrittsfacette (catastrophic optical damage, COD).

Für einen höheren Leistungsbereich ausgelegte Breitstreifenemitter mit Emissionsbreiten von 100 - 500 µm sind bezüglich der maximalen Pulsleistung bis zu einigen 10 Watt im Pulsbetrieb unter 1 µsec belastbar, haben allerdings eine sehr schlechte Abstrahlcharakteristik, d.h. Multimodebetrieb. Die Strahlformung mittels eines diffraktiven Elements oder der Einbau in ein externe Kavität ermöglichen zwar die Optimierung der Abstrahlcharakteristik, allerdings mit erheblichem Aufwand, z.B. hinsichtlich der Resonatorjustage oder mit im Vergleich zu narrow-stripe Emittern deutlich eingeschränkter Qualität (diffraktive Lösung).

Aus der EP 1 517 415 und der WO 2005/029114 ist bekannt, zur Verbesserung der Emission von Laserstrahlung in einem geodätischen Gerät eine Laserquelle zu verwenden, in welcher die Strahlung multimodal emittierender Laserdioden durch eine modenselektive Komponente so beeinflusst wird, dass die von der Laserquelle emittierte Laserstrahlung monomodalen Charakter besitzt. Hierfür wird vorgeschlagen, einen Kantenemitter oder einen vertikalen Halbleiteremitter mit einer externen Kavität zu betreiben, in der sich eine modenselektive Komponente befindet, z.B. eine Monomodefaser oder Resonatorspiegel, die einen modenselektiven Resonatoraufbau bewirken. Zur Kompensation der durch die verlängerte Kavität erzielten grösseren Pulsdauer können zur Pulskompression Komponenten mit negativer Dispersion verwendet werden.

Zudem ist es grundsätzlich möglich, auch andere Lasertypen, z.B. durch Halbleiterlaser gepumpte Mikro-Chip-Festkörperlaser im Single-Mode-Betrieb, in geodätischen Geräten zu verwenden. Allerdings besitzen diese den Nachteil grosser Abmessungen, eines hohen Energieverbrauchs und einer ungünstigen Betriebscharakteristik, z.B. aufgrund thermischer Effekte. Dadurch wird die Praxistauglichkeit solcher Lösungen für den Einsatz zur Vermessung im Feld eingeschränkt.

Dioden-gepumpte Festkörperlaser, erfüllen hinsichtlich der Strahlqualität und der Peakleistung die Anforderungen, sind aber vom Konzept her sehr aufwendig (Pumplaser mit Ansteuerung, Einkoppeloptik, Verstärkungsmedium, Güteschaltung, Resonator) und kostenintensiv. Sie erlauben ausserdem im Allgemeinen keine flexible Anpassung der Pulsrate, da diese durch die hohe thermische Belastung bei niedriger Effizienz limitierend ist.

Eine Aufgabe der vorliegenden Erfindung besteht darin, ein geodätisches Messgerät mit einer Laserquelle bereitzustellen, dessen Emission bei gleicher Leistung eine verbesserte Strahlqualität bzw. bei gleicher Strahlqualität eine höhere Leistung oder sowohl höhere Leistung als auch verbesserte Strahlqualität aufweist.

Eine weitere Aufgabe der vorliegenden Erfindung besteht darin, bauliche Verbesserungen in Hinblick auf Grösse, Komplexität, Energieverbrauch und/oder Aufbau für ein geodätisches Messgerät mit Laserquelle zu ermöglichen.

Diese Aufgaben werden erfindungsgemäss durch die Merkmale der Ansprüche 1, 11 oder 12 sowie durch Merkmale der abhängigen Ansprüche gelöst bzw. diese Lösungen weitergebildet.

Die Erfindung basiert auf der Integration von Trapezlasern in geodätische Entfernungsmesser. Trapezlaser oder "tapered diode laser" bzw. "single-mode single-emitter semiconductor laser", wie sie z.B. in der DE 197 17 571 oder der WO 98/49759 dargestellt werden, sind für den cw-Laserbetrieb im Bereich einiger Watt kommerziell erhältlich. Sie bestehen aus einem geführten Wellenleiterbereich (ridgewaveguide), der eine sehr gute Strahlqualität ähnlich einem narrow-stripe Emitter hat und an einen trapezförmigen Bereich (tapered-waveguide) ankoppelt, der praktisch die custratende Kode aufnimmt und intern verstärkt. Somit sind theoretisch. Ausgangsleistungen von einigen Watt cw mit nahezu beugungsbegrenzter Strahlqualität von M²<1.5 erreichbar.

Problematisch ist die Integration eines Trapezlasers in ein geodätisches Gerät. Die Emissionsfläche ist mit typischerweise 1x200 µm zwar vergleichbar mit einem Breitstreifenemitter, jedoch besitzt die Emission einen sehr starken Astigmatismus. In der schnell divergenten Achse bzw. fast-axis liegt die Strahltaille an der Emitterfläche, wohingegen im Gegensatz zum Breitstreifenemitter in der slow-axis der scheinbare Emissionspunkt nicht an bzw. in der Nähe der Emitterfläche liegt, sondern an dem Übergang vom geführten Wellenleiterbereich zum trapezförmigen Bereich. Aufgrund dieser starken asymmetrischen Struktur weisen Trapezlaser einen sehr hohen Astigmatismus von ca. 600 µm auf, bei einer Trapezlänge von 2 mm.

Dieses erfordert für die Verwendung in einem geodätischen Gerät die Anpassung einer speziellen Optik zur Kompensation des Astigmatismus und gleichzeitiger Kollimation zur gattungsgemäss erforderlichen Vermessung von Zielen in großer Distanz, wobei auch eine parallele Symmetrisierung des Strahlquerschnittes vorteilhaft ist. Durch die Optik 1 muss somit das Auseinanderfallen der Emissionspunkte in den beiden Achsen korrigiert bzw. kompensiert und eine Zielbeleuchtung auch über grössere Entfernungen ermöglicht werden. Die bei Verwendung von Trapezlasern als Strahlquelle erforderliche Astigmatismuskorrektur unterscheidet sich hierbei von den üblichen strahlbeeinflussenden Massnahmen bei narrow-stripe-Emittern, da bei diesen der Astigmatismus um zwei Grössenordnungen kleiner ist und keine Korrekturen erfordert.

Bei entsprechender Auslegung der Optik ist auch die effiziente Einkopplung in eine monomodige Faser möglich, so dass eine von der Optik unabhängige Positionierung des Trapezlasers und der gepulsten Ansteuerelektronik möglich ist.

Für den Betrieb des Trapezlasers in einem geodätischen Entfernungsmesser wird als Steuerung eine elektrische Pulsschaltung verwendet, die je nach Auflösung und Messgeschwindigkeit für eine Laufzeitmessung Pulslängen zwischen 1 ns und einige 10 ns bei Wiederholraten bis zu 1 MHz liefert. Aufgrund der relativ grossen Emissionsfläche der Trapezlaserdioden können Ausgangsleistungen von über 25 W bei Pulslängen von 5-10 ns und produktrelevanten Lebensdauern realisiert werden. Die Pulsleistungen sind damit vergleichbar zu Breitstreifenemittern bei allerdings rund 20-fach höherer Strahldichte.

Bei Messungen auf nicht kooperative Ziele, wie sie beispielsweise in Form von natürlich rauhen Oberflächen häufig zu vermessen sind, treten durch den Pulsbetrieb des Trapezlasers Probleme auf, welche die erzielbare Genauigkeit beeinflussen. Geodätisch präzise Messungen erfordern gewöhnlich eine hohe Präzision der Distanzmessung bis hin in den Submillimeterbereich sowie eine hohe Wiederholgenauigkeit, die möglichst unabhängig von der Materialoberfläche bzw. einem speziellen Auftreffpunkt sein soll.

Wird ein Trapezlaser elektrisch gepulst betrieben, variiert über die Dauer des Einschwingvorgangs des geführten Wellenleiterbereichs die energetische Verteilung über die longitudinalen Moden des Lasers. Dies führt dazu, daß sich die spektrale Verteilung über die Dauer eines Pulses verschiebt, d.h. die spektralen Anteile sind zeitabhängig. Diese Abhängigkeit kann bei rauhen Oberflächen aufgrund der auftretenden Speckles zur Beeinflussung der Messgenauigkeit bzw. Wiederholgenauigkeit führen. Rauhe Oberflächen können durch das Auftreten von Speckles in der Beobachtungsebene eine starke spektrale Abhängigkeit zeigen, was zu spektral unterschiedlichen Antworten führt. Da durch die spektral abhängige Reflektivität jeweils frühere oder spätere Teile eines Pulses bevorzugt reflektiert werden, kommt es zu einer Verschiebung des detektierbaren Peaks des Pulses in seiner zeitlichen Lage. Die Messung erfährt somit eine Abhängigkeit von der Oberfläche bzw. der lateralen Position auf dem Ziel. Eine weitere Optimierung der Ansteuerung des Trapezlasers kann daher über eine getrennte Versorgung des geführten Wellenleiterbereichs und des trapezförmigen Bereichs erreicht werden. In diesem Fall kann der Diodentreiber aus zwei Bereichen bestehen, die eine unterschiedliche Ansteuerung erlauben, insbesondere verschiedene Stromstärken bereitstellen. Dabei kann der geführte Wellenleiterbereich im Dauerstrichbetrieb gehalten werden, so dass nur der trapezförmige Bereich gepulst betrieben wird.

Durch die im Mittel sehr niedrige thermische Belastung des Trapezlasers im Pulsbetrieb - einige mW - gegenüber der Auslegung im cw-Betrieb - einige Watt - ist im allgemeinen eine auf die Strahlqualität äusserst störend wirkende thermische Linsenbildung im trapezförmigen Bereich zu vernachlässigen.

Das Einbringen einer Gitterstruktur, z.B. als DFB-Struktur ("distributed feedback") im geführten Wellenleiterbereich erlaubt neben der räumlichen Monomodigkeit auch eine spektrale Monomodigkeit ("single frequency"), was die Vermessung von rauhen, nicht-kooperativen Zielen erleichtert, da im Einfrequenzbetrieb keine Fluktuationen des Speckle-Musters auftreten, die insbesondere bei Teilabschattungen zu einer Verfälschung der Distanzinformation führen können.

Durch die Verwendung einer entsprechenden Ansteuerung, ggf. ergänzt durch die Anpassung der Laserdiode und einer die Charakteristik der Trapezlaser berücksichtigenden Optik werden Trapezlaser auch für geodätische Geräte verwendbar bzw. diese verbesserbar, so dass deren Möglichkeiten in Bezug auf Reichweite, Messgenauigkeit - sowohl in Distanz als auch lateral - und Messgeschwindigkeit gesteigert bzw. bei gleichen Parametern der Aufwand und die Komplexität verringert werden können.

Ein erfindungsgemässer elektrooptischer Entfernungsmesser und ein geodätisches Vermessungsgerät sowie hierfür geeignete erfindungsgemässe Laserquellen werden nachfolgend anhand von in der Zeichnung schematisch dargestellten Ausführungsbeispielen rein beispielhaft näher beschrieben. Im einzelnen zeigen
- Fig.1: die schematische Darstellung eines erfindungsgemässen Entfernungsmessers mit Trapezlaser;
- Fig.2: die Darstellung einer zeitlichen Variation der Modenverteilung über den Strompuls in einem Trapezlaser;
- Fig.3: die Darstellung einer spektralen Antwort der Reflektivität eines rauhen Zieles aufgrund von Speckles;
- Fig.4: die Darstellung von Laserpuls und Verlauf der reflektierten Intensität für zwei laterale Positionen;
- Fig.5: die schematische Darstellung einer erfindungsgemässen getrennten Versorgung des Trapezlasers;
- Fig.6: die schematische Darstellung einer Schaltungsanordnung des Stands der Technik zur Ansteuerung eines Trapezlasers;
- Fig.7: die schematische Darstellung einer Schaltungsanordnung zur Ansteuerung eines Trapezlasers;
- Fig.8: die schematische Darstellung einer Schaltungsanordnung zur erfindungsgemässen Ansteuerung des Trapezlasers;
- Fig.9: die schematische Darstellung einer ersten Ausführungsform der Sendeoptik für einen erfindungsgemässen Entfernungsmessers;
- Fig.10: die schematische Darstellung einer zweiten Ausführungsform der Sendeoptik für einen erfindungsgemässen Entfernungsmessers;
- Fig.11: die schematische Darstellung einer dritten Ausführungsform der Sendeoptik für einen erfindungsgemässen Entfernungsmessers;
- Fig.12: die schematische Darstellung einer vierten Ausführungsform der Sendeoptik für einen erfindungsgemässen Entfernungsmessers und
- Fig.13: die schematische Darstellung eines erfindungsgemässen geodätischen Vermessungsgerätes.

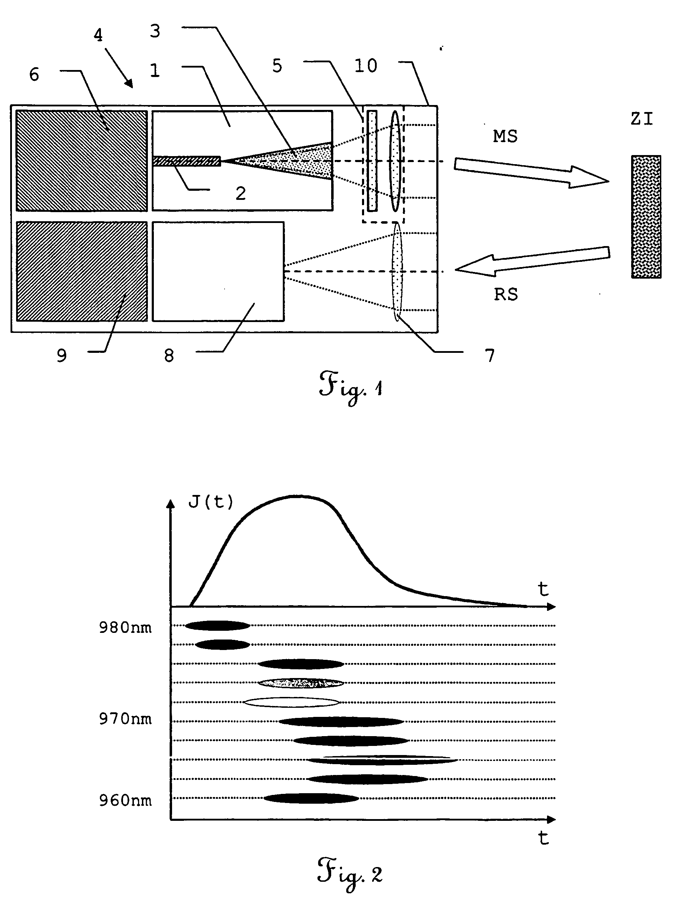

Fig.1 veranschaulicht den Aufbau eines Entfernungsmessers 4 mit Trapezlaser 1 in schematischer Darstellung. Der Entfernungsmesser weist einen Trapezlaser 1 als Laserquelle einer Sendeoptik 5 zur Emission der Laserstrahlung und eine Laserquellensteuerung 6 auf. Die Laserstrahlung wird als Messstrahlung MS auf ein zu vermessendes Ziel ZI emittiert, von dort teilweise als reflektierte Messstrahlung RS von einer Empfangsoptik 7 und einem Detektor 8 empfangen, dessen Signale mit einer Auswerteeinheit 9 in Bezug auf die Entfernung zum Ziel ZI ausgewertet werden. Die Sendeoptik 5 ist erfindungsgemäss zur gleichzeitigen Kompensation der durch die in Fast- und Slow-axis unterschiedlichen Emissionsorte der Strahlung des Trapezlasers 1 bedingten Einflüsse ausgebildet. Die Sendeoptik 5 bewirkt somit eine Astigmatismuskompensation und eine hierzu parallele Kollimation der Laserstrahlung.

Der Trapezlasers 1 wird in der Slow-axis-Ansicht mit dem geführten Wellenleiterbereich 2 und einem trapezförmigen Bereich 3 dargestellt, an den eine Emitterfläche anschliesst. Der geführte Wellenleiterbereich 2 kann eine spektrale Rückkopplung zur Erzeugung einer spektralen und räumlichen Monomodigkeit aufweisen, insbesondere eine periodische Strukturierung des longitudinalen Brechungsindexprofils. Alternativ kann der Trapezlaser 1 auch über eine externe spektrale Rückkopplung zur Erzeugung einer spektralen und räumlichen Monomodigkeit erfügen, insbesondere über eine teildurchlässige Bereichspiegel-Auskopplung des geführten Wellenleiterbereichs 2 mit einem wellenlängenselektiven Element.

Die Laserquellensteuerung 6 ist als Pulsschaltung zur Erzeugung gepulster Laserstrahlung mit einer Pulsdauer kleiner als 500 ns und einer Pulsspitzenleistung grösser 1 W ausgebildet, wobei der Trapezlaser 1 über eine getrennte Versorgung für den geführten Wellenleiterbereich und den trapezförmigen Bereich verfügt. Hierdurch können zwei unterschiedliche Ansteuerungsarten, z.B. mit verschiedenen Stromstärken für geführten Wellenleiterbereich und trapezförmigen Bereich bereitgestellt werden, so dass der Trapezlaser mit einer Dauerstrichansteuerung für geführten Wellenleiterbereich 2 betrieben werden kann.

Fig.2 die Darstellung einer zeitlichen Variation der Modenverteilung über den Strompuls J(t) in einem Trapezlaser. Wird ein Trapezlaser elektrisch gepulst betrieben, variiert über die Dauer des Einschwingvorgangs des geführten Wellenleiterbereichs bzw. ridge-waveguides die energetische Verteilung über die longitudinalen Moden des Lasers, was durch die zeitabhängigen spektralen Anteile für den Wellenlängenbereich von 960nm bis 980 nm in dem unteren Teil der Fig.2 verdeutlicht wird. Dies führt dazu, daß sich z.B. über die Pulsdauer jedes Laserpulses die spektrale Verteilung vom langwelligen Bereich in den kurzwelligen Teil verschiebt.

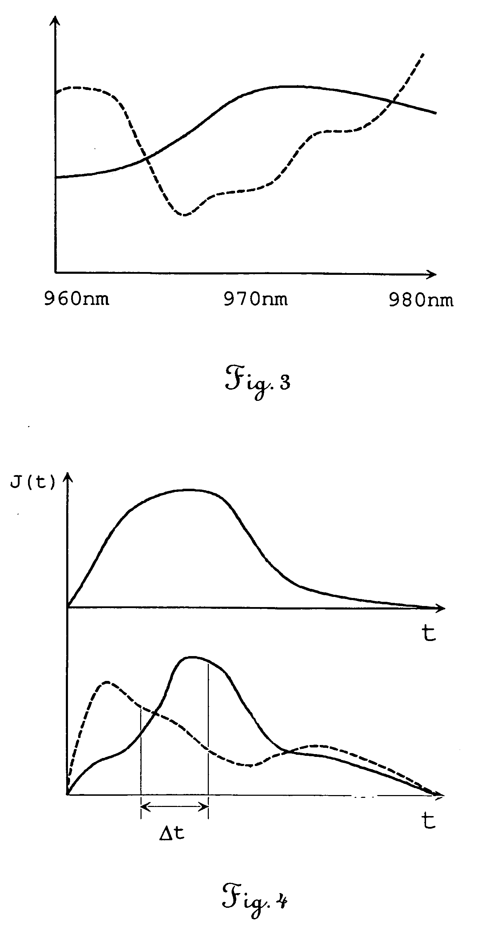

Obwohl übliche nicht-kooperative Ziele keine steilen Gradienten in ihrer spektralen Reflektivität zeigen, kann die Rauhigkeit der Oberfläche über die Erzeugung von Speckles in der Beobachtungsebene eine starke Abhängigkeit von der Wellenlänge zeigen, was in Fig.3 verdeutlicht wird. Dargestellt wird die spektral unterschiedliche Antwort der Reflektivität eines rauhen Zieles hervorgerufen durch Speckles bei gleicher Distanz aber zwei unterschiedlichen lateralen Positionen.

Die Auswirkungen von Laserpuls und Verlauf der reflektierten Intensität für zwei laterale Positionen auf die Messungen wird in Fig.4 dargestellt. Bei lateraler Bewegung des Messstrahls des geodätischen Instruments über das rauhe Ziel kann es aufgrund der spektralen Variation innerhalb eines Laserpulses somit zu einer deutlichen Änderung der interpretierten Distanz kommen. Die gestrichelte Position führt aufgrund eines stärkeren Signals im kurzwelligen Spektrum, welches am Anfang des angenommenen Pulses dominiert, zu einer Verschiebung des zeitlichen Schwerpunktes an den Pulsanfang, was zu einer anderen Laufzeit- und damit Distanzmessung als im zweiten Fall führt, der hier mit durchgezogener Linie dargestellt ist. Die zeitliche Variation des Pulsspektrums wird somit über die spektrale Abhängigkeit des empfangenen Speckle-Musters in eine Variation der gemessenen Distanz übertragen. Bei nicht-kooperativen Zielen bzw. rauhen Oberflächen von zu vermessenden Zielen führt die spektrale Veränderung während des Pulsverlaufs somit zu variierenden Messergebnissen für ein und dieselbe Distanz, wenn diese für verschiedene laterale Positionen gemessen werden oder sich beispielsweise das ziel lateral bewegt.

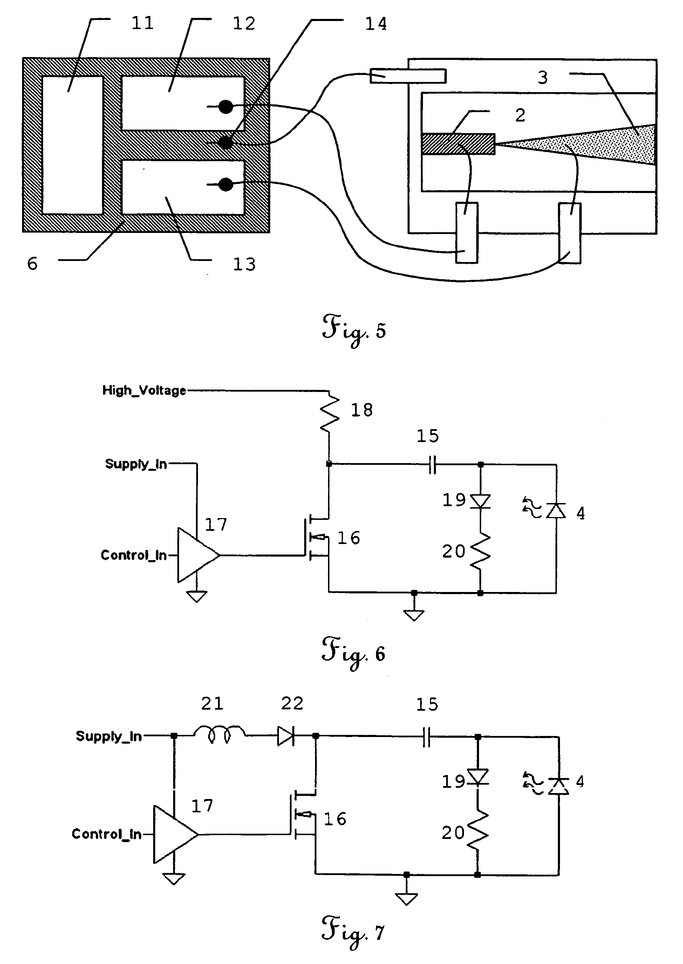

Fig.5 die schematische Darstellung einer erfindungsgemässen getrennten Versorgung des Trapezlasers. Eine Möglichkeit zur Vermeidung dieses die Messgenauigkeit negativ beeinflussenden Verhaltens besteht in der getrennten Ansteuerung oder Versorgung des geführten Wellenleiterbereichs 2 bzw. ridge-waveguides-Bereich und des trapezförmigen Bereichs 3 bzw. tapered-wavequide-Bereich. Für geodätische Anwendungen mit ihrer gattungsgemäß erforderlichen hohen Meßgenauigkeit ist hierbei ein Dauerstrichbetrieb des geführten Wellenleiterbereichs 2 sinnvoll, was zur Stabilisierung der Wellenlänge führt. Bei einer solchen DauerstrichAnsteuerung bleibt die spektrale Verteilung auf die longitudinalen Lasermoden über die gepulste Verstärkung des trapezförmigen Bereichs 3 zeitlich konstant. Der Pulsbetrieb mit mehreren Ampere wird auf den trapezförmigen Bereich 3 beschränkt.

Eine entsprechende Ansteuerungsschaltung besteht beispielsweise aus einem Versorgungsteil 11 mit Gleichstrom-Teil 12 für den geführten Wellenleiterbereich 2 und einem Puls-Treiber 13 für den trapezförmigen Bereich 3, wobei eine gemeinsame Elektrode 14 als Masse verwendet wird.

Eine weitere Stabilisierung der spektralen Verteilung zur Erzeugung einer spektralen und räumlichen Monomodigkeit des geführten Wellenleiterbereichs 2 kann über eine spektrale Rückkopplung in diesem Bereich erreicht werden, insbesondere eine periodische Strukturierung des longitudinalen Brechungsindexprofils. Dieses ist z.B. durch eine bei DFB(Distributed Feedback)- oder DBR(Distributed Bragg-Reflector)-Lasern typische Strukturierung des longitudinalen Brechungsindexprofils entlang des geführten Wellenleiterbereichs möglich.
Alternativ oder ergänzend ist eine externe Rückkopplung über eine teildurchlässige Bereichspiegel-Auskopplung des geführten Wellenleiterbereichs 2 mit einem wellenlängenselektiven Element realisierbar, wie z.B. einem Gitter oder Prisma.

Fig.6 zeigt die schematische Darstellung einer Schaltungsanordnung des Stands der Technik zur Ansteuerung eines Trapezlasers. Das Schaltelement 16 schliesst einen mit hoher Spannung, d.h. typischerweise 20V bis 200V, geladenen Kondensator 15 über einen Trapezlaser 4 als optisches Element kurz. Alternativ kann das optische Element aber auch eine andere Komponente sein, welche bei einem Stromdurchfluss Licht erzeugt, wie z.B. eine Laserdiode, LED oder Blitzlampe. Dabei wird ein möglichst grosser Teil dieser Energie als Lichtpuls abgegeben. Nach einem solchen Erzeugen eines Laserpulses wird der Kondensator 15 über ein Ladeelement 18 wieder aufgeladen.

Als Schaltelement 16 kann dabei ein schneller FeldeffektTransistor (FET), ein Avalanche-Transistor, ein BipolarTransistor oder ein anderes Element, welches den Wechsel zwischen einem niederohmigen und einem hochohmigen Zustand erlaubt, verwendet werden. Zur Ansteuerung des Schaltelementes kann ein Treiber 17 eingesetzt werden, wobei dieser diskret aufgebaut oder ein IC sein kann.

Als Ladeelement 18 zur Aufladung des Kondensators 15 wird typischerweise ein Widerstand genutzt, wobei aber auch ein Schaltelement, welches nach dem Laden wider hochohmig wird, z.B. ein Transistor, zum Einsatz kommen kann. Eine erste Diode 19 weist zwei Hauptfunktionen auf. Zum einen dient sie zum Ableiten des Ladestroms des Kondensators 15, zum anderen als Freilaufdiode für den Pulsstrom des optischen Elementes 4. Die erste Diode 19 unterbindet eine Schwingung des durch das optische Elemente 4, den Kondensator 15 und das Schaltelement 16 gebildeten Kreises und verhindert eine über das optische Element 4 anliegende positive Spannung.

Das optionale Abbauelement 20 dient zum schnelleren Abbau des Pulsstroms des optischen Elementes 4, wobei das Abbauelement 20 für hohe schnelle Ströme einen Widerstand darstellen muss. Typischerweise wird ein Widerstand mit ein paar Ohm verwendet. Das Abbauelement 20 wird vor allem beim Verwenden von niederohmige Laserdioden bei hohen Strömen benötigt.

Der Nachteil einer solchen Schaltungsanordnung des Stands der Technik liegt darin, dass 50% der in den Kondensator 15 zu transferierenden Energie im Ladeelement 18 verloren gehen. Zudem wird Hochspannung benötigt.

In Fig.7 wird eine abgewandelte und vereinfachte Schaltungsanordnung zur Ansteuerung eines Trapezlasers als optischem Element 4 dargestellt, wobei ein kurzer, d.h. je nach optischem Element 4 von einigen 100ps bis zu einigen ns, und starker, d.h. von einigen 100mA bis über 100A, Strompuls erzeugt wird. In dieser Schaltungsanordnung wird das Schaltelement 16 zusammen mit einer Induktivität 21 genutzt, um eine Hochspannung zu erzeugen. Das zugrundeliegende Prinzip beruht darauf, dass nach dem Erzeugen eines Laserpulses das Schaltelement 16 nicht sofort wieder hochohmig wird, sondern eine gewisse Zeitspanne niederohmig bleibt, also temporär niederohmig geschaltet wird. In dieser Zeit liegt über die Induktivität 21 die Eingangsspannung minus der Spannung an der zweiten Diode 22 und dem Schaltelement 16 an. Folglich baut sich in dieser Zeit ein Strom in der Induktivität 21 auf, so dass eine Energiespeicherung in der Induktivität 21 erfolgt. Wird nun das Schaltelement 16 wieder hochohmig, wird aufgrund des anhaltenden Stromflusses in der Induktivität 21 dieser nur über den durch den Kondensator 15, erste Diode 19 und Abbauelement 20 definierten Pfad fliessen, so dass Energie von der Induktivität 21 zum Kondensator 15 übertragen wird. Die zweite Diode 22 verhindert das Zurückfliessen der Energie vom Kondensator 15 zur Induktivität 21. Der Kondensator 15 ist nun geladen und der Lichtpuls kann wie bei der Schaltungsanordnung gem. Fig.6 abgegeben werden. Die Induktivität 21 wird somit zum Zwischenspeichern von Energie eingesetzt, wobei über ihren Induktivitätswert eingestellt werden kann, wie viel Energie in welcher Zeit gespeichert wird und wie schnell die Energie an den Kondensator 15 abgeführt wird. Damit ist die Versorgung des Trapezlaser so ausgebildet, dass nach einem emittierten Laserpuls ein zum Laden des Kondensators 15 verwendetes Schaltelement 16 temporär niederohmig geschaltet wird, wobei der Kondensator 15 über eine Induktivität 21 geladen wird. Die Vorteile dieser Schaltungsanordnung gegenüber der in Fig. 6 dargestellten Schaltungsanordnung des Stands der Technik liegen darin, dass keine externe Hochspannung benötigt, mittels der Induktivität 21 der Kondensator 15 mit deutlich weniger Verlusten geladen und die Leistung des Pulses über die Ladedauer problemlos variiert werden können. Im Fall eines resonanten Betriebs kann die zweite Diode 22 auch in der Schaltungsanordnung weggelassen werden.

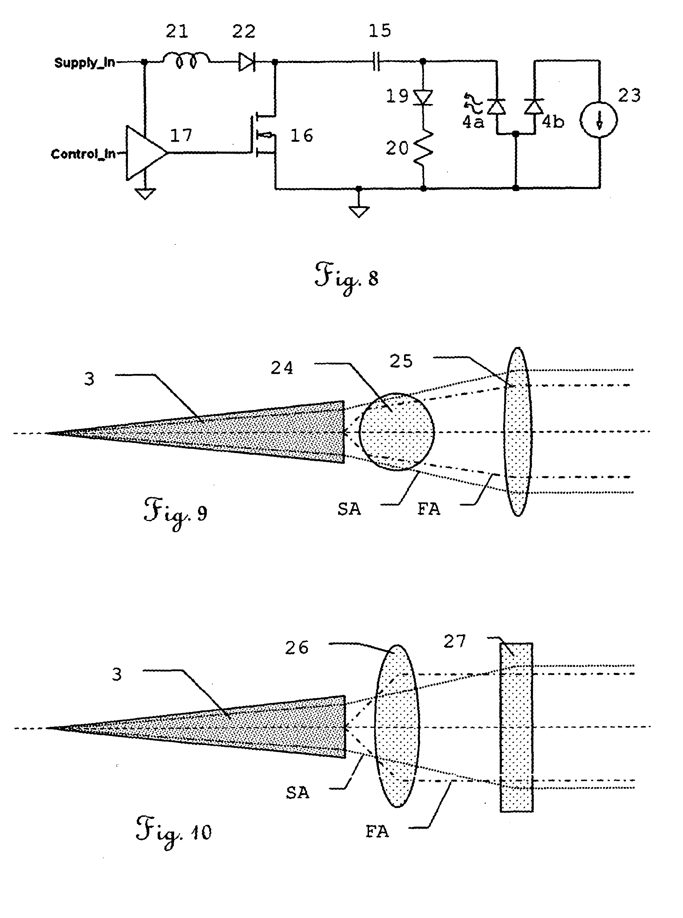

In Fig.8 wird eine nochmals weiter modifizierte Schaltungsanordnung zur erfindungsgemässen Ansteuerung des Trapezlasers schematisch dargestellt. Diese Schaltungsanordnung dient zur getrennten Versorgung bzw. Ansteuerung der beiden Bereiche eines Trapezlasers. Ein solcher Trapezlaser weist zwei Anoden- oder zwei Kathodenanschlüsse auf, ein Pulsanschluss 4a und ein Gleichstromanschluss 4b. Die Schaltungsanordnung wird hierbei an den Pulsanschluss 4a angeschlossen, an den Gleichstromanschluss 4b wird hingegen eine Gleichstromquelle 23 angeschlossen, die typischerweise als geregelte Stromquelle oder stromgeregelte Spannungsquelle ausgeführt sein kann. Damit weist die Versorgung eine Gleichstromquelle 23 für den geführten Wellenleiterbereich auf, so dass dieser im Dauerstrichbetrieb gehalten werden kann.

Die in den Fig.6-8 gezeigten Schaltungsanordnungen sind grundsätzlich auch unabhängig von ihrer Verwendung mit einem Trapezlaser oder in einem Entfernungsmesser zur Ansteuerung und Versorgung eines anderen im Pulsbetrieb zu betreibenden Elementes sowie für andere Anwendungszwecke geeignet. Insbesondere können diese Schaltungsanordnungen auch mit anderen Typen von Laserdioden oder lichtemittierenden Komponenten verwendet werden.

Die Astigmatismuskompensation für einen Trapezlaser und eine hierzu parallele Kollimation der Laserstrahlung in einer ersten Ausführungsform der Sendeoptik zeigt Fig.9 in schematischer Darstellung mit einer überlagerten Darstellung der Fast- und Slow-axis-Ansichten bzw. - Strahlgänge. Die aus dem trapezförmigen Bereich 3 emittierte Strahlung wird im Fast-Axis-Strahlgang FA durch eine Zylinderlinse 24 an die Divergenz des Slow-Axis-Strahlgangs SA angepasst, eine nachfolgende Linse 25, die vorzugsweise als Asphäre ausgebildet sein kann, kollimiert die Laserstrahlung in beiden Achsen und emittiert diese als Messstrahlung, ggf. über weitere Optikkomponenten, auf das zu vermessende Ziel. Die optischen Parameter könne für ein Beispiel der ersten Ausführungsform wie folgt angegeben werden. In der Fast-axis wird die Zylinderlinse 24 als eine Gradientenindex-Zylinderlinse von f = 170 µm mit einem Durchmesser von 250 µm ausgebildet und in einer Distanz von ca. 20 µm von der Emitterfläche positioniert. Die Linse 25 ist eine asphärische Linse von 19 mm Brennweite und 6 mm Durchmesser und wird der Zylinderlinse 24 im Abstand von ca. 17 mm nachgeordnet. Die Zylinderlinse 24 hat dabei eine Position, die um wenige µm von der Kollimationsstellung abweicht, um eine Restdivergenz von 7° zu erlauben, die vergleichbar zur Divergenz in der Slow-axis ist. Die Zylinderlinse 24 ist somit geringfügig dejustiert und die Kollimation in der Fast-axis wird durch die spezifische Kombination von Zylinderlinse 24 und asphärischer Linse 25 bewirkt. Ein symmetrischer Strahldurchmesser ist dabei durch die Wahl der Zylinderlinsenbrennweite gegeben. Nachfolgend übernimmt die Asphäre die Kollimation des Strahlenbündels. Der Strahldurchmesser beträgt 4,5 mm und ist mit 0,1 mrad beugungsbegrenzt.

Fig.10 zeigt die schematische Darstellung einer zweiten Ausführungsform der Sendeoptik für einen erfindungsgemässen Entfernungsmessers, wiederum mit einer überlagerten Darstellung der Fast- und Slow-axis-Ansichten bzw. - Strahlgänge. In dieser Ausführungsform wird als Sendeoptik eine Kombination aus zwei Zylinderlinsen verwendet, die so ausgebildet und angeordnet sind, dass eine erste Zylinderlinse 26 die Laserstrahlung den Fast-axis-Strahlgang FA und eine zweite Zylinderlinse 27 den Slow-axis-Strahlgang SA kollimiert. Somit werden die Strahlgänge in Slow- und Fast-axis unabhängig voneinander kollimiert, was auch die achsenspezifische Berücksichtigung der unterschiedlichen Emissionsorte im Trapezlaser bzw. dessen Astigmatismus erlaubt.

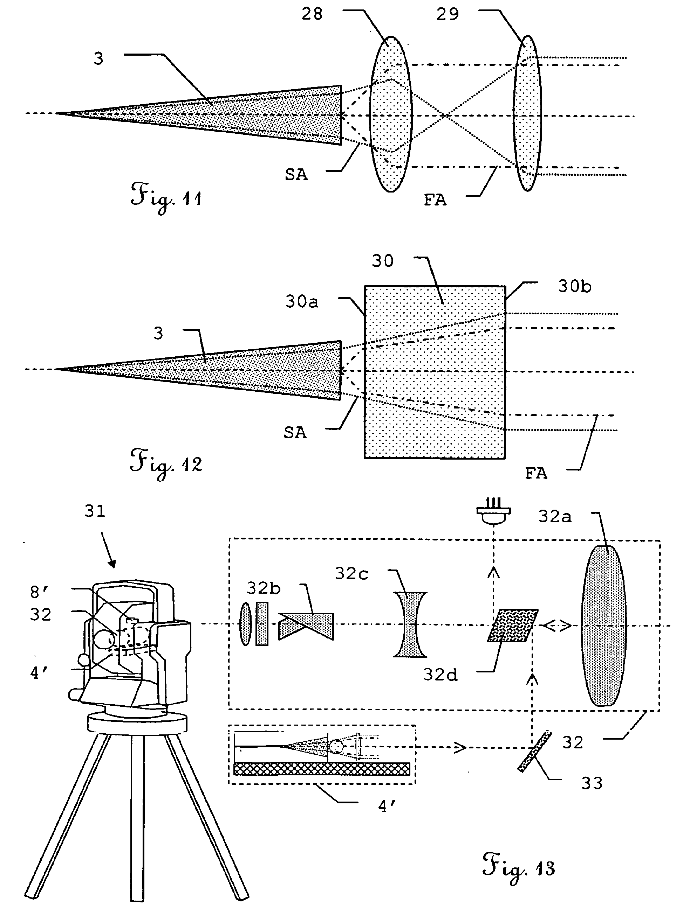

Eine dritte Ausführungsform der Sendeoptik für einen erfindungsgemässen Entfernungsmessers wird in Fig.11 dargestellt. Bei dieser Optik wird eine sphärische Linse 28, bzw. wegen der hohen Divergenz der Fast-axis auch eine Asphäre, und eine Zylinderlinse 29 eingesetzt. Die Brennweite der Linse 28 wird dabei so gewählt, dass bei der bekannten Divergenz des Fast-axis-Strahlgangs FA der gewünschte Durchmesser - für geodätische Anwendungen sind dieses einige mm - in einer Kollimationsstellung für diese Achse erreicht wird. Da es sich um eine sphärische Linse handelt, wirkt sich die Brechkraft auch auf die Slow-axis aus und führt zu einem Zwischenbild. Die Brechkraft der Zylinderlinse 29, die wegen der kleineren Divergenz im Allgemeinen nicht asphärisch ausgelegt sein muß, wird nun so gewählt, dass der Strahldurchmesser des Fast-axis-Strahlgangs FA dem des Slow-axis-Strahlgangs SA entspricht, so dass ein symmetrischer Strahlquerschnitt entsteht. Das Zwischenbild der slow-axis befindet sich hierbei in der Brennebene der Zylinderlinse 29. Diese Kombination aus einer Zylinderlinse 29 und einer vorgeschalteten, insbesondere asphärischen, Linse 28 modifiziert die Emission so, dass die Linse 28 die Laserstrahlung in der Fast-axis kollimiert und die Zylinderlinse 29 die Laserstrahlung in der Slow-axis kollimiert.

In Fig.12 wird eine vierte Ausführungsform der Sendeoptik in einer überlagerten Darstellung der Fast- und Slow-axis-Ansichten bzw. -Strahlgänge gezeigt. In dieser Ausführungsform wird die Abfolge von zwei Linsen durch ein einzelnes diffraktives Element 30 ersetzt, wobei - die dem Trapezlaser zugewandte Stirnseite 30a oder Vorderseite so ausgebildet ist, dass die Divergenz des Fast-axis-Strahlgangs FA an die Divergenz des Slow-axis-Strahlgangs SA angepasst wird und - die dem Trapezlaser abgewandte Stirnseite 30b oder Rückseite die Laserstrahlung in beiden Achsen kollimiert. Alternativ kann auch der Strahlgang der zweiten Ausführungsform durch ein einziges Element realisiert werden. Eine solchermassen integrierte Optik kombiniert somit die Wirkung einer divergenzanpassenden oder in der Fast-axis kollimierenden Zylinderlinse auf der ersten Stirnfläche 30a und einer rotationssymmetrischen oder zweiten zylindrischen Linse auf der zweiten Stirnfläche 30b des diffraktiven Elementes 30, so dass nur ein optisches Element zur Strahlformung benötigt wird.

Die in den Fig.9-12 gezeigten Optiken sind grundsätzlich auch unabhängig von ihrer Verwendung mit einem durch die getrennte Versorgung angesteuerten Trapezlaser verwendbar. Insbesondere können diese Sendeoptiken auch mit anderen Typen von Trapezlasern zur Astigmatismuskorrektur und Kollimierung verwendet werden.

Fig.13 zeigt die schematische Darstellung eines Tachymeters als ein Beispiel für ein erfindungsgemässes geodätisches Vermessungsgerät 31 mit elektrooptischem Entfernungsmesser, dessen Komponenten und Funktionalität in diesem Beispiel im Vermessungsgerät 31 verteilt angeordnet und somit baulich integriert sind. Im Gehäuse des Vermessungsgerätes 31 befinden sich als Komponenten der Sendeanteil 4' des Entfernungsmessers, d.h. Laserquelle mit Laserquellensteuerung und Sendeoptik, sowie das optische System 32 und ein Detektor 8' zur Erfassung von zu vermessenden Zielen.

Die Laserstrahlung wird von einem strahlungserzeugenden Trapezlaser und der nachgeschalteten Sendeoptik emittiert und über eine strahlumlenkende Komponente 33 in das optische System 32 des Vermessungsgerätes 31 eingekoppelt. Das optische System 32 zur Erfassung und Vermessung von Zielen weist eine Objektivlinse 32a und eine Okulareinheit 32b auf. Zwischen diesen Komponenten befindet sich ein Fokussierglied 32c und ein reflektierendes Umlenkmittel 32d, mit dessen Hilfe die vom Sendeanteil 4' stammende und in den Strahlgang des optischen Systems 32 eingekoppelte Strahlung über die Objektivlinse 32a emittiert wird. Von einem Ziel zurückreflektierte Strahlung wird wiederum von der Objektivlinse 32a erfasst und ein Teil der Strahlung wird von dem reflektierenden Umlenkmittel 32d auf den Detektor 8' geführt.

In dieser Anordnung kann die Strahlung des Sendeanteils 4' im Zusammenwirken mit dem Detektor 8' zu einer Entfernungsmessung zu einem Ziel verwendet werden. Das dargestellte Beispiel ist nur eine von vielen möglichen Ausführungsformen erfindungsgemässer geodätischer Vermessungsgeräte und dient zur exemplarischen Verdeutlichung eines möglichen Zusammenwirkens von Komponenten.

Es versteht sich, dass diese dargestellten Figuren nur Beispiele möglicher Ausführungsformen schematisch darstellen. So können die genutzten Komponenten auch in anderen Zusammenstellungen und Abfolgen erfindungsgemäss verwendet werden. Darüber hinaus liegt es im Handeln des Fachmanns ergänzende oder alternative optische Komponenten, beispielsweise mit diffraktiver Wirkung, sowie allgemein in der Laserphysik bzw. -technik verwendete Komponenten gleicher oder ähnlicher Wirkung bzw. Funktionalität zu verwenden.

## Patentansprüche

1. Elektrooptischer Entfernungsmesser (4) mit
• einer Laserquelle mit einer Laserquellensteuerung (6) zur Erzeugung gepulster Laserstrahlung mit einer Pulsdauer kleiner als 500 ns und einer Pulsspitzenleistung grösser 1 W,
• einer Sendeoptik (5) zur Emission der Laserstrahlung als Messstrahlung (MS) auf ein zu vermessendes Ziel (ZI),
• einer Empfangsoptik (7) und einem Detektor (8,8') mit einer Auswerteeinheit (9) zum Empfang und zur distanzmessenden Auswertung vom Ziel (ZI) reflektierter Messstrahlung (RS),
**dadurch gekennzeichnet, dass**
- die Laserquelle einen Trapezlaser (1) mit einer getrennten Versorgung für einen geführten Wellenleiterbereich (2) und einen trapezförmigen Bereich (3) aufweist und
- die Sendeoptik (5) zur Astigmatismuskompensation und zur Kollimation der Laserstrahlung ausgebildet ist.

2. Entfernungsmesser (4) nach Anspruch 1,
**dadurch gekennzeichnet, dass**
die getrennte Versorgung zwei unterschiedliche Stromstärken für den geführten Wellenleiterbereich (2) und den trapezförmigen Bereich (3) bereitstellt.

3. Entfernungsmesser (4) nach Anspruch 1 oder 2,
**dadurch gekennzeichnet, dass**
der Trapezlaser (1) eine Dauerstrichansteuerung für den geführten Wellenleiterbereich (2) aufweist.

4. Entfernungsmesser (4) nach einem der Ansprüche 1 bis 3,
**dadurch gekennzeichnet, dass**
der Trapezlaser (1) eine spektrale Rückkopplung im geführten Wellenleiterbereich (2) zur Erzeugung einer spektralen und räumlichen Monomodigkeit aufweist, insbesondere eine periodische Strukturierung des longitudinalen Brechungsindexprofils.

5. Entfernungsmesser (4) nach einem der Ansprüche 1 bis 3,
**dadurch gekennzeichnet, dass**
der Trapezlaser (1) eine externe spektrale Rückkopplung zur Erzeugung einer spektralen und räumlichen Monomodigkeit aufweist, insbesondere über eine teildurchlässige Bereichspiegel-Auskopplung des geführten Wellenleiterbereichs (2) mit einem wellenlängenselektiven Element.

6. Entfernungsmesser (4) nach einem der vorangehenden Ansprüche,
**dadurch gekennzeichnet, dass**
die Versorgung mit einem zur Energieversorgung des Trapezlaser genutzten Kondensator (15) so ausgebildet ist, dass nach einem emittierten Laserpuls ein zum Laden des Kondensators (15) verwendetes Schaltelement (16) temporär niederohmig geschaltet wird, wobei der Kondensator (15) über eine Induktivität (21) geladen wird.

7. Entfernungsmesser (4) nach einem der vorangehenden Ansprüche,
**dadurch gekennzeichnet, dass**
die Versorgung eine Gleichstromquelle (23) für den geführten Wellenleiterbereich (2) aufweist, insbesondere eine geregelte Stromquelle oder eine stromgeregelte Spannungsquelle.

8. Entfernungsmesser (4) nach einem der vorangehenden Ansprüche,
**dadurch gekennzeichnet, dass** die Sendeoptik (5) eine der folgenden Alternativen aufweist
• Kombination aus einer Zylinderlinse (24) und einer nachfolgenden, insbesondere asphärischen, Linse (25), wobei
- die Zylinderlinse (24), insbesondere eine Gradientenindex-Zylinderlinse oder asphärische Zylinderlinse, so ausgebildet und angeordnet ist, dass die Divergenz in der Fast-axis an die Divergenz in der Slow-axis angepasst wird und
- die Linse (25) die Laserstrahlung in beiden Achsen kollimiert;
• Kombination aus zwei Zylinderlinsen (26,27), die so ausgebildet und angeordnet sind, dass
- eine erste Zylinderlinse (26) die Laserstrahlung in der Fast-axis und
- eine zweite Zylinderlinse (27) die Laserstrahlung in der Slow-axis kollimiert;
• Kombination aus einer Zylinderlinse (29) und einer vorgeschalteten, insbesondere asphärischen, Linse (28), wobei
- die Linse (28) die Laserstrahlung in der Fast-axis kollimiert und
- die Zylinderlinse (29) die Laserstrahlung in der Slow-axis kollimiert;
• monolithisches oder mehrstückiges diffraktives Element (30), wobei
- die dem Trapezlaser (1) zugewandte Stirnseite (30a) so ausgebildet ist, dass die Divergenz in der Fast-axis an die Divergenz in der Slow-axis angepasst wird und
- die dem Trapezlaser (1) abgewandte Stirnseite (30b) die Laserstrahlung in beiden Achsen kollimiert.

9. Entfernungsmesser (4) nach einem der vorangehenden Ansprüche,
**dadurch gekennzeichnet, dass**
die Sendeoptik (5) zur Erzeugung eines im wesentlichen kreisrunden oder quadratischen Strahlquerschnitts der Laserstrahlung ausgebildet ist.

10. Entfernungsmesser (4) nach einem der vorangehenden Ansprüche,
**dadurch gekennzeichnet, dass**
die Sendeoptik (5) eine monomodige Faser zur Strahlführung aufweist.

11. Geodätisches Vermessungsgerät (16), insbesondere Totalstation, Tachymeter oder Laserscanner,
**gekennzeichnet durch**
einen Entfernungsmesser nach einem der Ansprüche 1 bis 10.

12. Verfahren zur Erzeugung gepulster Laserstrahlung mit einer Pulsdauer kleiner als 500 ns und einer Pulsspitzenleistung grösser 1 W in einem Entfernungsmesser (4) mit einer Laserquelle mit Sendeoptik zur Emission der Laserstrahlung als kollimierte Messstrahlung (MS) auf ein zu vermessendes Ziel (ZI),
**dadurch gekennzeichnet, dass**
die Laserquelle einen Trapezlaser (1) aufweist, dessen geführter Wellenleiterbereich (2) und trapezförmiger Bereich (3) getrennt angesteuert werden.

13. Verfahren nach Anspruch 12,
**gekennzeichnet durch**
einen Dauerstrichbetrieb für den geführten Wellenleiterbereich (2).

14. Verfahren nach Anspruch 12 oder 13,
**gekennzeichnet durch**
ein Erzeugen spektraler und räumlicher Monomodigkeit durch spektrale Rückkopplung.

15. Verfahren nach einem der Ansprüche 12 bis 14,
**gekennzeichnet durch**
ein temporäres Schalten eines Schaltelements (16) in den niederohmigen Zustand, wobei das Schaltelement (16) zum Laden eines für die Energieversorgung des Trapezlasers genutzten Kondensators (15) über eine Induktivität (21) verwendet wird.

## Claims

1. Electro-optical rangefinder (4) comprising
• a laser source having a laser source control (6) for generating pulsed laser radiation having a pulse duration of less than 500 ns and a pulse peak power greater than 1 W,
• a transmission optical system (5) for emitting the laser radiation as measuring radiation (MS) to a target (ZI) to be surveyed,
• a receiving optical system (7) and a detector (8, 8') having an evaluation unit (9) for reception and for distance-measuring evaluation of the measuring radiation (RS) reflected by the target (ZI),
**characterized in that**
- the laser source has a trapezoidal laser (1) with a separate supply for a guided waveguide region (2) and a trapezoidal region (3) and
- the transmission optical system (5) is formed for astigmatism compensation and for collimation of the laser radiation.

2. Rangefinder (4) according to Claim 1, **characterized in that** the separate supply provides two different currents for the guided waveguide region (2) and the trapezoidal region (3).

3. Rangefinder (4) according to Claim 1 or 2, **characterized in that** the trapezoidal laser (1) has a continuous-wave actuation for the guided waveguide region (2).

4. Rangefinder (4) according to any of Claims 1 to 3, **characterized in that** the trapezoidal laser (1) has a spectral feedback in the guided waveguide region (2) for generating a spectral and spatial monomodality, in particular a periodic structuring of the longitudinal refractive index profile.

5. Rangefinder (4) according to any of Claims 1 to 3, **characterized in that** the trapezoidal laser (1) has an external spectral feedback for generating a spectral and spatial monomodality, in particular via coupling out of the guided waveguide region (2) by means of a partially transmitting zonal mirror using a wavelength-selective element.

6. Rangefinder (4) according to any of the preceding claims, **characterized in that** the supply is formed with a capacitor (15) used for the power supply of the trapezoidal laser, in such a way that, after an emitted laser pulse, a switching element (16) used for charging the capacitor (15) is temporarily switched to the low-impedance state, the capacitor (15) being charged via an inductance (21).

7. Rangefinder (4) according to any of the preceding claims, **characterized in that** the supply has a DC current source (23) for the guided waveguide region (2), in particular a controlled current source or a current-controlled voltage source.

8. Rangefinder (4) according to any of the preceding claims, **characterized in that** the transmission optical system (5) has one of the following alternatives
• combination of a cylindrical lens (24) and a downstream, in particular aspherical, lens (25),
- the cylindrical lens (24), in particular a gradient index cylindrical lens or aspherical cylindrical lens, being formed and arranged so that the divergence in the fast axis is adapted to the divergence in the slow axis and
- the lens (25) collimating the laser radiation in both axes;
• combination of two cylindrical lenses (26, 27) which are formed and arranged so that
- a first cylindrical lens (26) collimates the laser radiation in the fast axis and
- a second cylindrical lens (27) collimates the laser radiation in the slow axis;
• combination of a cylindrical lens (29) and an upstream, in particular aspherical, lens (28),
- the lens (28) collimating the laser radiation in the fast axis and
- the cylindrical lens (29) collimating the laser radiation in the slow axis;
• monolithic or multi-part diffractive element (30),
- the end face (30a) facing the trapezoidal laser (1) being formed in such a way that the divergence in the fast axis is adapted to the divergence in the slow axis and
- the end face (30b) facing away from the trapezoidal laser (1) collimating the laser radiation in both axes.

9. Rangefinder (4) according to any of the preceding claims, **characterized in that** the transmission optical system (5) is formed for producing a substantially circular or square beam cross-section of the laser radiation.

10. Rangefinder (4) according to any of the preceding claims, **characterized in that** the transmission optical system (5) has a monomodal fibre for beam guidance.

11. Geodetic surveying device (16), in particular a total station, tacheometer or laser scanner, **characterized by** a rangefinder according to any of Claims 1 to 10.

12. Method for generating pulsed laser radiation having a pulse duration of less than 500 ns and a pulse peak power greater than 1 W in a rangefinder (4) comprising a laser source with transmission optical system for emitting the laser radiation as collimated measuring radiation (MS) to a target (ZI) to be surveyed, **characterized in that** the laser source has a trapezoidal laser (1) whose guided waveguide region (2) and trapezoidal region (3) are separately controlled.

13. Method according to Claim 12, **characterized by** continuous-wave operation for the guided waveguide region (2).

14. Method according to Claim 12 or 13, **characterized by** generation of spectral and spatial monomodality by spectral feedback.

15. Method according to any of Claims 12 to 14, **characterized by** a temporary switching of a switching element (16) to the low-impedance state, the switching element (16) being used for charging a capacitor (15), used for the power supply of the trapezoidal laser, via an inductance (21).

## Revendications

1. Télémètre électro-optique (4), avec :
• une source laser avec une commande de source laser (6), pour produire un rayonnement laser pulsé d'une durée d'impulsion inférieure à 500 ns et d'une puissance crête de l'impulsion supérieure à 1 W,
• une optique émettrice (5), pour l'émission du rayonnement laser sous forme de rayonnement de mesure (MS) sur une cible (ZI) à mesurer,
• une optique réceptrice (5) et un détecteur (8, 8'), avec une unité d'évaluation (9), pour la réception et pour l'évaluation, en mesurant une distance, d'un rayonnement de mesure (RS) réfléchi par la cible (ZI),
**caractérisé en ce que**
- la source laser présente un laser trapèze (1) avec une alimentation séparée, pour une zone à guides d'ondes (2) guidée et une zone (3) en forme de trapèze,
- l'optique émettrice (5) est réalisée pour la compensation d'astigmatisme et pour la collimation du rayonnement laser.

2. Télémètre (4) selon la revendication 1,
**caractérisé en ce que**
l'alimentation séparée fournit deux intensité de courant différentes, pour la zone à guides d'ondes (2) guidée et la zone (3) en forme de trapèze.

3. Télémètre (4) selon la revendication 1 ou 2,
**caractérisé en ce que**
le laser trapèze (1) présente une commande en onde entretenue pour la zone à guides d'ondes (2) guidée.

4. Télémètre (4) selon l'une quelconque des revendications 1 à 3,
**caractérisé en ce que**
le laser trapèze (1) présente une rétroaction spectrale dans la zone à guides d'ondes (2) guidée, pour générer une nature monomode spectrale et spatiale, en particulier une structuration périodique du profil d'indice de réfraction longitudinal.

5. Télémètre (4) selon l'une quelconque des revendications 1 à 3,
**caractérisé en ce que**
le laser trapèze (1) présente une rétroaction spectrale externe, pour générer une nature monomode spectrale et spatiale, en particulier par l'intermédiaire d'une extraction par miroir à zones partiellement transparent de la zone de guides d'ondes (2) guidée avec un élément à sélectivité de longueur d'ondes.

6. Télémètre (4) selon l'une des revendications précédentes,
**caractérisé en ce que**
l'alimentation est réalisée avec un condensateur (15) utilisé pour l'alimentation en énergie du laser trapèze, de manière que, après une impulsion laser émise, un élément de commutation (16), utilisé pour charger le condensateur (15), soit temporairement commuté à un état faiblement ohmique, le condensateur (15) étant chargé par l'intermédiaire d'une inductance (21).

7. Télémètre (4) selon l'une des revendications précédentes,
**caractérisé en ce que**
l'alimentation présente une source de courant continu (23) pour la zone à guides d'ondes (2) guidée, en particulier une source de courant régulée ou une source de tension à régulation d'intensité.

8. Télémètre (4) selon l'une des revendications précédentes,
**caractérisé en ce que**
l'optique émettrice (5) présente l'une des alternatives suivantes :
• combinaison d'une lentille cylindrique (24) et d'une lentille (25) branchée an aval, en particulier asphérique, où
- la lentille cylindrique (24), en particulier une lentille cylindrique à gradient d'indice ou une lentille cylindrique asphérique, est réalisée et disposée de manière que la divergence dans l'axe rapide soit adaptée à la divergence dans l'axe lent, et
- la lentille (25) collimate le rayonnement laser dans les deux axes ;
• combinaison de deux lentilles cylindriques (26, 27), réalisées et disposées de manière qu'
- une première lentille cylindrique (26) collimate le rayonnement laser dans l'axe rapide, et
- une deuxième lentille cylindrique (27) collimate le rayonnement laser dans l'axe lent ;
• combinaison d'une lentille cylindrique (29) et d'une lentille (28) branchée an amont, en particulier asphérique, où
- la lentille (28) collimate le rayonnement laser dans l'axe rapide, et
- la lentille (29) cylindrique collimate le rayonnement laser dans l'axe lent ;
• élément diffractif (30) monolithique ou en plusieurs morceaux, où
- la face frontale (30a), tournée vers le laser trapèze (1), est réalisée de manière que la divergence dans l'axe rapide soit adaptée à la divergence dans l'axe lent, et
- la face frontale (30b), opposée au laser trapèze (1), collimate le rayonnement laser dans les deux axes.

9. Télémètre (4) selon l'une des revendications précédentes,
**caractérisé en ce que**
l'optique émettrice (5) est réalisée pour générer une section transversale offerte au rayonnement, sensiblement circulaire ou carrée, du rayonnement laser.

10. Télémètre (4) selon l'une des revendications précédentes,
**caractérisé en ce que**
l'optique émettrice (5) présente une fibre monomode pour le guidage des rayons.

11. Appareil de relevé géodésique (16), en particulier station totale, tachymètre ou scanneur laser,
**caractérisé par**
un télémètre selon l'une des revendications 1 à 10.

12. Procédé de génération d'un rayonnement laser pulsé, d'une durée d'impulsion inférieure à 500 ns et d'une puissance crête de l'impulsion supérieure à 1 W dans un télémètre (4) avec une source laser équipée d'une optique d'émission, pour l'émission du rayonnement laser sous forme de rayonnement de mesure (MS) collimaté sur une cible (ZI) à mesurer,
**caractérisé en ce que**
la source laser présente un laser trapèze (1), dont la zone à guides d'ondes (2) guidée et la zone (3) en forme de trapèze sont commandées séparément.

13. Procédé selon la revendication 12,
**caractérisé par**
un fonctionnement en mode en onde entretenue, pour la zone de guide d'ondes (2) guidée.

14. Procédé selon la revendication 12 ou 13,
**caractérisé par**
une génération à nature monomode spectrale et spatiale, par contre-réaction spectrale.

15. Procédé selon l'une des revendications 12 à 14,
**caractérisé par**
une commutation temporaire d'un élément de commutation (16) à l'état faiblement ohmique, l'élément de commutation (16) étant utilisé pour charger, par l'intermédiaire d'une inductance (21), un condensateur (15) utilisé pour l'alimentation en énergie du laser trapèze.
